# FASCICULE DE BREVET EUROPEEN

(11) **EP 0 469 994 B1**
(45) Date de publication et mention de la délivrance du brevet: **01.05.1996**
(21) Numéro de dépôt: 91402148.0
(22) Date de dépôt: 31.07.1991
(51) Int. Cl.: B65G 65/46

(54) **Dispositif formant vis de vidange du produit résiduel stocké dans un silo**
Schneckenanordnung zum Austrag des in einem Silo zurückgebliebenen Produktes
Auger device for discharging the residual product stored in a silo

(30) Priorité: 03.08.1990 FR 9009950
(43) Date de publication de la demande: 05.02.1992
(73) Titulaire: ETABLISSEMENTS DENIS, Société Anonyme, F-28160 Brou (FR)
(72) Inventeur: Denis, Pierre, F-28160 Brou (FR)
(74) Mandataire: Cournarie, Michèle

(56) Documents cités:
- DE-U- 8 634 115
- US-A- 4 313 705

## Description

La présente invention concerne un dispositif formant vis de vidange du produit résiduel stocké dans un silo à fond sensiblement plat avec au moins une ouverture d'évacuation, du type comprenant une vie sans fin supportée en rotation par une poutre située au-dessus du fond du silo et parallèlement à celui-ci, ladite poutre étant montée pivotante par l'une de ses extrémités dite interne qui est articulée sur un pivot situé au dessus de l'ouverture d'évacuation, alors que vers son autre extrémité dite externe la poutre prend appui sur le fond du silo par un système d'entraînement equipé d'une roue, et un groupe moteur pour entraîner à rotation la vis sans fin et la roue.

US-A-4 313 705 décrit un dispositif formant vis de vidange constitué par deux poutres diamétralement opposées supportant chacune un vis sans fin, mues par un unique groupe moteur central.

Dans un silo à fond sensiblement plat, le produit stocké s'écoule gravitairement par une ouverture centrale et par des ouvertures latérales situées de part et d'autre de celle-ci dans une galerie ou caniveau d'où il est transporté au moyen d'un dispositif de reprise pour être achemine a l'exterieur du silo.

D'une manière generale, la quantité de produit qui peut s'écouler par gravité ou vidange gravitaire ne représente globalement que les deux tiers environ de la capacité de stockage du silo, A titre d'exemple, le volume du produit résiduel atteint 7000 t environ pour un silo en demi-sphère de 48 m de diamètre dont la capacité de stockage est de l'ordre de 20.000 t. Autrement dit, plus la capacité de stockage augmente et plus le volume résiduel augmente.

Pour extraire ce volume résiduel ou vidange résiduelle, plusieurs solutions ont été envisagées. Une solution consiste à faire appel à de la main-d'oeuvre qui déplace le produit résiduel vers l'ouverture d'évacuation au moyen de pelles. Une autre solution traditionnelle consiste à utiliser des engins moteurs pilotés qui rendent le travail moins pénible et plus efficace. Enfin, une dernière solution, telle que celle évoquée en préambule, consiste à utiliser des dispositifs mécaniques automatiques à vis sans fin.

Toutefois, cette dernière solution poutre pivotante avec vis sans fin présente des inconvénients qui s'amplifient avec l'augmentation de la capacité de stockage des silos et les exigences de débit des utilisateurs. Concrètement cette solution devient inadaptée lorsque le diamètre du silo atteint et dépasse 30 m environ. Dans cette situation fréquente à l'heure actuelle, on revient finalement aux solutions traditionnelles précitées pour faire la vidange résiduelle.

En effet, deux problèmes majeurs liés l'un à l'autre concernent la structure de la poutre et la puissance du groupe moteur pour entraîner en rotation la vis sans fin.

La poutre doit avoir une structure suffisamment rigide pour pouvoir résister aux pressions importantes exercées par le produit, en particulier lors de la vidange gravitaire. Plus la capacité de stockage augmente, plus le débit augmente et plus ces pressions sont élevées. Il faut alors renforcer l'ossature de la poutre et il en résulte un accroissement de volume qui gène la vidange gravitaire, une augmentation de poids et une augmentation de prix.

En outre, l'augmentation du diamètre et des débits entraîne des vis sans fin de plus en plus importantes, ce qui impose d'augmenter la puissance du groupe moteur pour faire démarrer la rotation de la vis sans fin, du fait de la résistance opposée par le produit en contact avec la vis. Concrètement, une surpuissance de l'ordre de 50% s'avère nécessaire au démarrage avec pour résultat un groupe moteur plus volumineux et donc plus encombrant.

En outre, comme le groupe moteur est généralement situé au niveau de l'ouverture centrale d'évacuation, non seulement il crée un obstacle à la vidange gravitaire, mais il faut en outre le protéger contre les pressions élevées produites au cours de cette vidange.

L'invention vise à pallier ces inconvénients, et elle propose à cet effet un dispositif formant vis de vidange du produit résiduel stocké dans un silo à fond sensiblement plat, du type précité et qui se caractérise en ce qu'il comprend au moins une deuxième poutre de structure globalement semblable à la première poutre avec l'une de ses extrémités dite interne montée pivotante vers l'extremité externe de la première poutre, alors que vers son autre extrémité dite externe la deuxième poutre prend appui sur le fond du silo par un système d'entraînement, ladite deuxième poutre supportant à rotation une deuxième vis sans fin, en ce que deux groupes moteurs sont situés vers les extrémités externes des deux poutres, respectivement, chaque groupe moteur comprenant deux moteurs qui entraînent respectivement la vis sans fin et le système d'entraînement de la poutre associée, et en ce que des moyens sont prévus pour asservir le pivotement de la deuxième poutre par rapport à la première lorsque celle-ci est immobile, ainsi que des moyens qui, inversement, asservissent le pivotement de la première poutre par rapport à la deuxième poutre.

D'une manière générale et à titre d'exemple, pour des silos ayant un diamètre de l'ordre de 60 m, on prévoit trois poutres, la troisième poutre étant montée pivotante autour d'un pivot supporté vers l'extrémité externe de la seconde poutre d'une manière semblable à l'articulation prévue entre les première et seconde poutres.

Ainsi, le fait de scinder le dispositif en plusieurs poutres élémentaires articulées permet de s'affranchir de tous les inconvénients inhérents a une poutre unique. De plus, comme chaque groupe moteur associé a une poutre est divisé en deux moteurs distincts pour entraîner à rotation la vis sans fin et le système d'entraînement de la poutre et du fait de la longueur réduite de la vis sans fin, la puissance et l'encombrement de ces moteurs peuvent être notablement réduits.

De plus, grâce à la disposition des moteurs aux extrémités des poutres, on facilite l'évacuation du produit car l'ouverture du silo n'est plus encombrée par le groupe moteur de la première poutre.

Selon un avantage important de l'invention, la structure modulaire du dispositif entraîne une diminution notable du volume et du poids par rapport à un dispositif à poutre unique de même longueur et de même débit, d'ou il résulte une économie de matière et de puissance installée (groupes moteurs de puissance moindre), et un prix de revient réduit tout en ayant une meilleure efficacité.

D'autres avantages, caractéristiques et détails de l'invention ressortiront de la description qui va suivre faite en référence aux dessins annexes, donnés uniquement à titre d'exemple et dans lesquels :
- la figure 1 est une vue de dessus simplifiée du dispositif conforme à l'invention,
- la figure 2 est une vue de dessus de la structure du dispositif limitée aux extrémités adjacentes des deux premières poutres, et
- la figure 3 est une vue en bout suivant la flèche III de la figure 1.

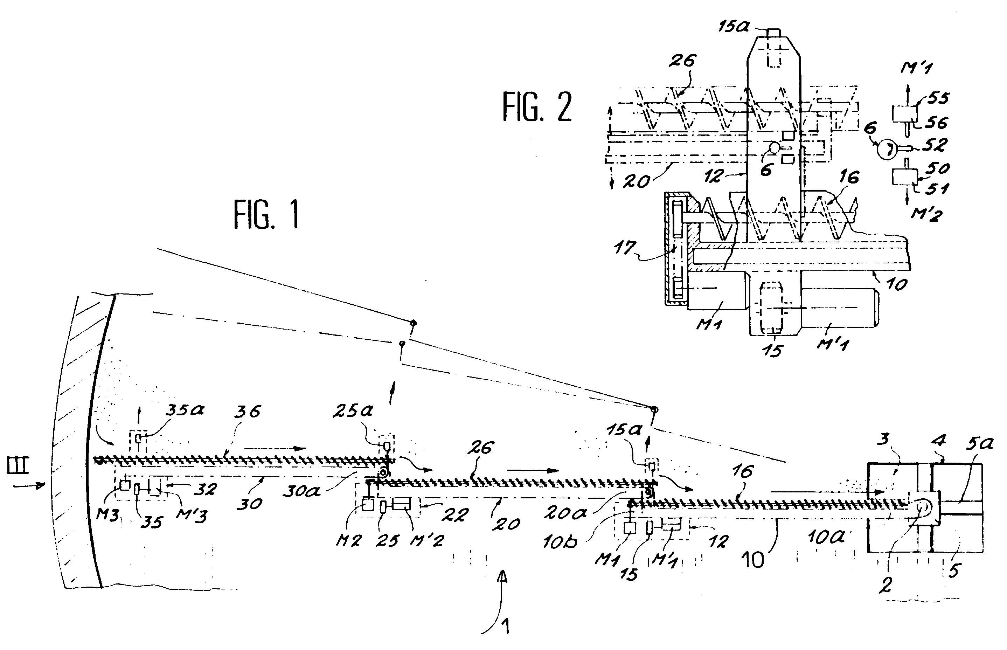

En se reportant à la figure 1, le dispositif 1 formant vis de vidange du produit résiduel stocké dans un silo à fond sensiblement plat comprend, dans l'exemple considéré ici, trois poutres 10, 20 et 30 placées au-dessus du fond du silo et parallélement à celui-ci, ces poutres ayant globalement la même structure.

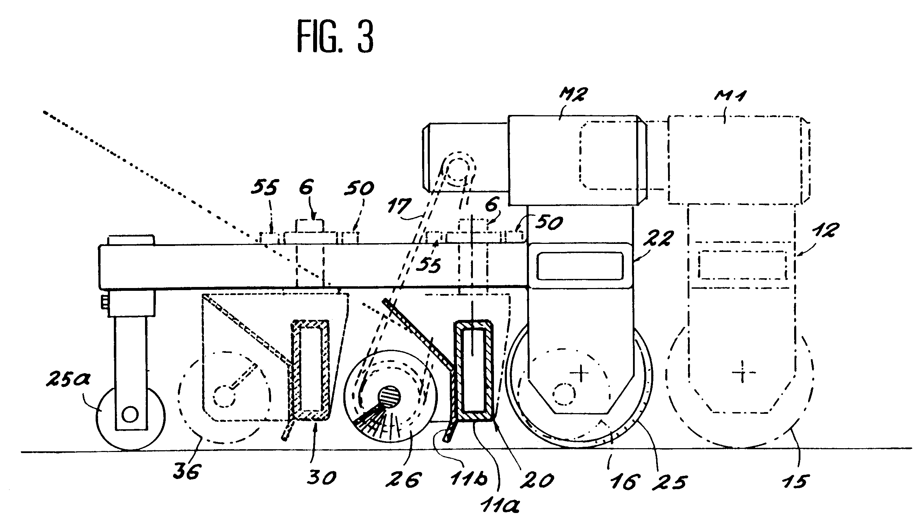

Chaque poutre 10, 20 et 30 est formée d'une âme métallique rectiligne 11a et d'un profilé métallique rectiligne 11b qui s'étendent sensiblement sur une même longueur (figure 3). Le profilé 11b est fixé par une face contre une face longitudinale de l'âme 11a et parallèlement à celle-ci, et il s'étend sur une hauteur de 30 cm environ. La partie supérieure du profilé 11b est repliée vers l'avant à sa partie supérieure, c'est-à-dire du côté opposé à l'âme 11a. La face longitudinale du profilé 11b, opposée à sa face fixée à l'âme 11a sera dénommée face avant.

La première poutre 10 (figure 1) est montée pivotante par l'une 10a de ses extrémités dite interne qui est articulée autour d'un pivot 2 situé globalement au dessus de l'ouverture d'évacuatlon 3 prévue par exemple au centre du fond du silo et délimitée par un auget 4. Le pivot 2 est fixé à un support 5 placé au centre de l'auget 4 et raccordé par des barres de liaison 5a aux bords de l'auget 4. Vers son autre extrémité 10b dite externe, la poutre 10 est supportée par une platine 12.

Cette platine 12 (figures 2 et 3) supporte un groupe moteur comprenant deux moteurs électriques M1 et M′1, et un système d'entraînement tel une roue 15 par l'intermédiaire de laquelle la poutre 10 prend appui sur le fond du silo. L'axe de rotation de la roue 15 est sensiblement parallèle à la poutre 10, de manière à permettre le mouvement pivotant de celle-ci, et il est relié à l'arbre de sortie du moteur M′1.

La première poutre 10 supporte en rotation une vis sans fin 16 portée par des paliers fixés à la face avant du profilé 11b, ladite vis s'étendant parallèlement à la poutre. A son extrémité interne, la vis sans fin 16 surplombe l'ouverture d'évacuation 3 de manière à ce que le produit qu'elle achemine s'écoule par cette ouverture. Vers son autre extrémité, l'axe de la vis sans fin 16 est accouplé à l'arbre de sortie du moteur M1 par un système 17 à pignons et à chaîne par exemple.

Les deuxième et troisième poutres 20 et 30 présentent une structure analogue à celle de la première poutre 10. Autrement dit, on retrouve l'ensemble des éléments suivants : deux profilés métalliques 11a et 11b, deux platines 22 et 32 qui supportent les extrémités dites externes 20b et 30b des poutres 20 et 30, deux groupes moteurs comprenant chacun deux moteurs électriques M2, M′2, et M3, M′3 deux systèmes d'entraînement 25 et 35 des poutres 20 et 30 commandés par les moteurs M′2 et M′3 et deux vis sans fin 26 et 36 entraînées en rotation par les moteurs M2 et M3, respectivement.

Vers son extrémité 20a dite interne, la poutre 20 est montée articulée par un pivot 6 supporté en rotation par la platine 12 de la première poutre 10, alors que vers son extrémité 30a dite interne, la poutre 30 est montée articulée par un pivot 6 supporté en rotation par la platine 22 de la seconde poutre 20.

Lorsque les trois poutres 10, 20 et 30 sont parallèles les unes aux autres, elles sont décalées les unes par rapport aux autres. La deuxième poutre 20 est en avant de la première poutre 10 en considérant le sens de pivotement, et la troisième poutre 30 est en avant de la seconde poutre 20. Il est à noter que l'extrémité interne de la seconde vis sans fin 26 de la deuxième poutre 20, du côté extrémité interne 20a de celle-ci, s'étend au-delà de l'extrémité de la vis sans fin 16 de la première poutre 10, du côté extrémité externe de celle-ci, pour que le produit véhicule par la seconde vis sans fin 26 soit repris par la première vis sans fin 16. Cette même disposition existe entre les vis sans fin 26 et 36 des deuxième et troisième poutres 20 et 30. L'extrémité de la vis sans fin 36 de la troisième poutre 30, du côté extrémité externe 30b de celle-ci, s'étend avantageusement au-delà de la platine 32 pour des raisons qui seront évoquées plus loin.

Des moyens 50 sont prévus pour asservir le pivotement de la deuxième poutre 20 par rapport à la première poutre 10 lorsque celle-ci est en mouvement. Dans l'exemple considéré ici (figures 2 et 3), ces moyens 50 sont constitués par un dispositif électrique tel un interrupteur 51 monté dans le circuit de commande du moteur M'2 du système d'entraînement 25 de la deuxième poutre 20. Cet interrupteur 51 est supporté par la platine 12 au voisinage du pivot d'articulation 6 des deux poutres 10 et 20. L'organe de déclenchement de cet interrupteur est constitué par un doigt 52 monté à l'extrémité supérieure du pivot d'articulation 6.

D'une manière inverse, des moyens 55 sont prévus pour asservir le pivotement de la première poutre 10 par rapport à la deuxième poutre 20. Ces moyens 55 sont également constitués par un interrupteur électrique 56 monté dans le circuit de commande du moteur M′1 du système d'entraînement 15 de la première poutre 10. Cet interrupteur 56 est supporté par la platine 12 au voisinage du pivot d'articulation 6 des deux poutres 10 et 20. L'organe de déclenchement de cet interrupteur 56 est le même que celui de l'interrupteur 51, à savoir le doigt 52 porté par le pivot d'articulation 6. Concrètement, les deux interrupteurs électriques 51 et 56 sont situés de part et d'autre du doigt 52. D'une manière semblable, il est prévu ces mêmes moyens 50 et 55 d'asservissement entre les poutres 20 et 30.

Enfin il est à noter la présence d'une roue 15a montée libre à l'avant de la platine 12 pour parfaire la stabllité de la poutre 10 sur la paroi de fond du silo. De manière analogue, deux roues libres 25a et 35a sont également respectivement supportées par les platines 22 et 32 des deux autres poutres 20 et 30.

Le fonctionnement du dispositif précédemment décrit est le suivant.

Une fois la vidange gravitaire effectuée, le dispositif est mis en fonctionnement pour réaliser la vidange résiduelle.

D'une manière générale, les trois moteurs respectifs M1, M2 et M3 d'entraînement en rotation des vis sans fin 16, 26 et 36 sont mis en route séquentiellement, les trois poutres 10, 20 et 30 étant sensiblement dans le prolongement les unes des autres. Le produit véhicule par la vis sans fin 36 de la troisième poutre 30 est repris par la vis sans fin 26 de la deuxième poutre 20, puis repris par la vis sans fin 16 de la première poutre 10 pour être déversé dans l'ouverture d'évacuation 3 du silo.

Les moteurs d'entraînement M′1, M′2 et M′3 des poutres sont également mis en route, mais tant que la résistance offerte par le produit s'oppose au mouvement pivotant des poutres 10, 20 et 30 celles-ci restent fixes. Concrètement, le moteur d'entraînement M′1 de la roue 15 de la première poutre 10 n'entre en fonctionnement que lorsque la poutre est dégagée du produit, instant qui est détecté par une cellule photoélectrique par exemple. Une fois le moteur M′1 commandé, les moteurs M′2 et M′3 d'entraînement des poutres 20 et 30 sont successivement mis en route.

Bien entendu, les poutres 10, 20 et 30 ne pivotent pas necessairement simultanément et suivant de même angle, car la quantité du produit, sa structure,... varient d'un endroit à l'autre. Pour ces différentes raisons, les dispositifs d'asservissement 50 et 55 du pivotement des poutres les unes par rapport aux autres ont été prévus.

Si la deuxième poutre 20 pivote plus rapidement que la première poutre 10, le doigt radial 52 des moyens d'asservissement 50 pivote dans un sens déterminé et vient agir sur l'interrupteur électrique 51, ce qui a pour effet de stopper le moteur M′2 d'entraînement de la poutre 20. Bien entendu, le moteur M′2 est à nouveau mis en route dès que le doigt n'agit plus sur l'interrupteur 51. Inversement, si la première poutre 10 pivote plus rapidement que la seconde poutre 20, le doigt radial 52 des moyens d'asservissement 55 pivote dans un sens inverse et vient agir sur l'interrupteur électrique 56, ce qui a pour effet de stopper le moteur M′1 d'entraînement de la poutre 10. Les mêmes moyens d'asservissement 50 et 55 prévus entre les seconde et troisième poutres 20 et 30 agissent de manière similaire.

Dans le cas d'un silo cylindrique les trois poutres 10, 20 et 30 s'étendent globalement sur un rayon du silo, et il est important de noter que l'extrémité de la vis sans fin 36 qui s'étend au-delà de la platine 32 de la troislème poutre 30 vient au voisinage de la paroi latérale interne du silo, ce qui permet d'évacuer le produit stocké dans cette zone.

Le dispositif conforme à l'invention s'applique dans le cas de la vidange résiduelle de produits divers, les céréales en général, ces produits en vrac, granuleux ou pulvérulents s'écoulant gravitairement.

Dans le cas de silos en demi-sphère, la vidange résiduelle peut être entièrement réalisée avec le dispositif conforme à l'invention, l'ensemble des vis sans fin s'étendant globalement sur une longueur correspondant au rayon du silo.

Dans le cas de silos à section non cylindrique, on peut très bien concevoir que l'ensemble du dispositif se déplace parallèlement à lui-même au lieu d'avoir uniquement un mouvement pivotant autour d'un point central. Il suffit pour cela, en prenant le cas d'un fond à section rectangulaire par exemple, de placer l'extrémité interne de la première poutre au voisinage de l'un des côtés du fond du silo, l'ensemble des poutres s'étendant sur une longueur correspondant à celle de l'autre côté du fond du silo et de déplacer ensuite l'ensemble le long d'une ouverture d'évacuation située sur un côté de la paroi de fond du silo. En variante, on peut déplacer l'ensemble sur une ligne médiane située à mi-distance entre deux côtés opposés du fond du silo, cette ouverture d'évacuation étant alors située sur cette ligne médiane.

Bien entendu l'invention n'est pas limitée aux modes de réalisation donnés uniquement à titre d'exemple, et elle comprend tous les équivalents techniques décrits précédemment. En particulier le principe de l'invention s'applique à un nombre de poutres au moins égal à deux, et l'hommme de métier peut facilement envisager, sans sortir du cadre de l'invention, des variantes au niveau des systèmes d'articulation entre les poutres, des systèmes d'asservissement du mouvement pivotant de deux poutres consécutives en utilisant des cellules photoélectriques par exemple, et des systèmes d'entraînement des poutres à base de chenilles par exemple. Les moteurs d'entraînement des vis sans fin et des poutres peuvent être du type pneumatique ou hydraulique. Enfin, certaines dispositions comme la position des moteurs d'entraînement et la prolongation de la vis sans fin de la dernière poutre en direction de la paroi du silo sont des perfectionnements qui peuvent être montés sur des dispositifs à une seule poutre.

## Revendications

1. Dispositif formant vis de vidange du produit résiduel stocké dans un silo à fond sensiblement plat avec au moins une ouverture d'évacuation (3), du type comprenant une vis sans fin (16) supportée a rotation par une poutre (10) située au-dessus du fond du silo et s'étendant parallèlement à celui-ci, ladite poutre (10) étant montée pivotante par l'une (10a) de ses extrémités dite interne qui est articulée sur un pivot (2) situé au dessus de l'ouverture d'évacuation (3), alors que vers son autre extrémité (10b) dite externe la poutre (10) prend appui sur le fond du silo par un système d'entraînement (15) equipé d'une roue, et un groupe moteur pour entraîner à rotation la vis sans fin et la roue, caractérisé en ce qu'il comprend au moins une deuxième poutre (20) de structure globalement semblable à la première poutre (10) avec l'une de ses extrémités dite interne (20a) montée pivotante autour d'un pivot (6) situé vers l'extrémité externe (10b) de la première poutre (10), alors que vers son autre extrémité dite externe (20b) la deuxième poutre (20) prend appui sur le fond du silo par un système d'entraînement (25), ladite deuxième poutre supportant à rotation une deuxième dis sans fin, en ce que deux groupes moteurs (M1,M'1; M2,M'2) sont associés aux deux poutres (10, 20), respectivement, chaque groupe moteur comprenant un moteur (M1;M2) qui entraîne la vis sans fin (16;26) et un moteur (M2;M'2) qui commande le système d'entraînement (15;25) de la poutre associée (10,20), en ce que des moyens (50) sont prévus pour asservir le pivotement de la seconde poutre (20) par rapport à la première poutre (10) et en ce que des moyens (55) sont prévus pour asservir le pivotement de la première poutre (10) par rapport à la seconde poutre (20) lorsque celle-ci est immobile.

2. Dispositif selon la revendication 1, caractérisé en ce que les deux groupes moteurs (M1,M'1; M2,M'2) sont situés vers les extrémités externes (10b,20b) des deux poutres (10,20), respectivement.

3. Dispositif selon l'une ou l'autre des revendications 1 et 2, caractérisé en ce que lorsque les deux poutres (10,20) sont parallèles l'une a l'autre, elles sont décalées l'une par rapport à l'autre, la deuxième poutre (20) étant en avant de la première poutre (10) en considérant le sens de pivotement, l'extrémité de la vis sans fin (26) de la deuxième poutre (20), du côté extrémité interne de celle-ci, s'étendant au-delà de l'extrémité de la vis sans fin (16) de la première poutre (10), du côté extrémité externe de celle-ci, pour que le produit véhiculé par la seconde vis sans fin soit repris par la première vis sans fin.

4. Dispositif selon la revendication 1, caractérisé en ce que les moyens (50) sont constitués par un dispositif électrique (51) monté dans le circuit de commande du moteur d'entraînement (M'2) du système d'entraînement (25) de la deuxième poutre (20), et qui est commandé par un doigt radial (52) solidaire du pivot d'articulation (6) des deux poutres (10,20).

5. Dispositif selon la revendication 1, caractérisé en ce que les moyens (55) sont constitués par un dispositif électrique (56) monté dans le circuit de commande du moteur d'entraînement (M'1) du système d'entraînement (15) de la première poutre (10), et qui est commandé également par le doigt radial (52) précité.

6. Dispositif selon l'une quelconque des revendications précédentes, caractérisé en ce que les moteurs (M1;M2) des vis sans fin (16;26) sont mis en fonctionnement l'un après l'autre.

7. Dispositif selon l'une quelconque des revendications précédentes, caractérisé en ce que la vis sans fin (26) supportée par la dernière poutre (20) s'étend au-delà de l'extrémité externe (20b) de celle-ci.

8. Dispositif selon l'une quelconque des revendications 1 a 6, caractérisé en ce qu'il comprend au moins une troisième poutre (30) de structure globalement semblable aux deux poutres (10,20) avec l'une de ses extrémités dite interne (30a) montée pivotante autour d'un pivot (7) situé vers l'extrémité externe (20b) de la deuxième poutre (20), alors que vers son autre extrémité dite externe (30b) la troisième poutre prend appui sur le fond du silo par un système d'entraînement (35) à axe de rotation parallèle a la poutre, et en ce que trois groupes moteurs (M1,M'1; M2,M'2; M3,M'3) sont associés aux trois poutres (10,20,30), respectivement.

9. Dispositif selon la revendication 8, caractérisé en ce qu'il comprend les moyens (50) précités pour asservir le pivotement de la troisième poutre (30) par rapport à la seconde poutre (20).

10. Dispositif selon la revendication 8 ou 9, caractérisé en ce qu'il comprend les moyens (55) précités pour asservir le pivotement de la deuxième poutre (20) par rapport à la troisième poutre (30).

11. Dispositif selon l'une quelconque des revendications 8 à 10, caractérisé en ce que la vis sans fin (36) supportée par la troisième poutre (30) s'étend au-delà de l'extrémité externe (30b) de celle-ci.

## Claims

1. Device forming an emptying screw for the residual product stored in a silo with a substantially flat base and with at least one discharge opening (3), which device is of the type comprising an endless screw (16) supported in rotation by a beam (10) situated above the base of the silo and extending parallel to it, said beam (10) being mounted pivotably via one (10a) of its ends, called the inner end, which is articulated on a pivot (2) situated above the discharge opening (3), while towards its other end (10b), called the outer end, the beam (10) bears on the base of the silo via a drive system (15) equipped with a wheel, and a motor assembly for driving the endless screw and the wheel in rotation, characterized in that it comprises at least a second beam (20) of overall structure similar to the first beam (10), with one of its ends, called the inner end (20a), mounted pivotably about a pivot (6) situated towards the outer end (10b) of the first beam (10), whereas towards its other end, called the outer end (20b), the second beam (20) bears on the base of the silo via a drive system (25), said second beam supporting in rotation a second endless screw, in that two motor assemblies (M1, M'1; M2, M'2) are associated with the two beams (10, 20), respectively, each motor assembly comprising a motor (M1; M2) which drives the endless screw (16; 26) and a motor (M2; M'2) which controls the system (15; 25) for driving the associated beam (10, 20), in that means (50) are provided for controlling the pivoting of the second beam (20) relative to the first beam (10), and in that means (55) are provided for controlling the pivoting of the first beam (10) relative to the second beam (20) when the latter is stationary.

2. Device according to Claim 1, characterized in that the two motor assemblies (M1, M'1; M2, M'2) are situated towards the outer ends (10b, 20b) of the two beams (10, 20), respectively.

3. Device according to either of Claims 1 and 2, characterized in that, when the two beams (10, 20) are parallel to one another, they are offset relative to one another, the second beam (20) being ahead of the first beam (10) in the direction of pivoting, the end of the endless screw (26) of the second beam (20), at the inner end of the latter, extending beyond the end of the endless screw (16) of the first beam (10), at the outer end of the latter, so that the product conveyed by the second endless screw is picked up by the first endless screw.

4. Device according to Claim 1, characterized in that the means (50) consist of an electrical device (51) mounted in the control circuit of the drive motor (M'2) of the system (25) driving the second beam (20), and which is controlled by a radial finger (52) integral with the articulation pivot (6) of the two beams (10, 20).

5. Device according to Claim 1, characterized in that the means (55) consist of an electrical device (56) mounted in the control circuit of the drive motor (M'1) of the system (15) driving the first beam (10), and which is controlled likewise by the abovementioned radial finger (52).

6. Device according to any one of the preceding claims, characterized in that the motors (M1; M2) of the endless screws (16; 26) are started up one after the other.

7. Device according to any one of the preceding claims, characterized in that the endless screw (26) supported by the final beam (20) extends beyond the outer end (20b) of the latter.

8. Device according to and one of Claims 1 to 6, characterized in that it comprises at least a third beam (30) of overall structure similar to the two beams (10, 20), with one of its ends, called the inner end (30a), mounted pivotably about a pivot (7) situated towards the outer end (20b) of the second beam (20), while towards its other end, called the outer end (30b), the third beam bears on the base of the silo via a drive system (35) with an axis of rotation parallel to the beam, and in that three motor assemblies (M1, M'1; M2, M'2; M3, M'3) are associated with the three beams (10, 20, 30), respectively.

9. Device according to Claim 8, characterized in that it comprises the abovementioned means (50) for controlling the pivoting of the third beam (30) relative to the second beam (20).

10. Device according to Claim 8 or 9, characterized in that it comprises the abovementioned means (55) for controlling the pivoting of the second beam (20) relative to the third beam (30).

11. Device according to any one of Claims 8 to 10, characterized in that the endless screw (36) supported by the third beam (30) extends beyond the outer end (30b) of the latter.

## Patentansprüche

1. Vorrichtung in Form einer Austragsschnecke zum Austragen von Restgut aus einem Silo mit im wesentlichen flachem Boden und mindestens einer Austragsöffnung (3), mit einer Schnecke (16), die drehbar an einem Balken (10) gelagert ist, der oberhalb des Silobodens angeordnet ist und sich parallel zu diesem erstreckt, wobei der Balken (10) an einem (10a) seiner Enden, als inneres Ende bezeichnet, welches an einem oberhalb der Austragsöffnung (3) angeordnetem Schwenklager (2) angelenkt ist, schwenkbar gelagert ist, während der Balken (10) an seinem anderen Ende (10b), als äußeres Ende bezeichnet, auf dem Siloboden durch ein Fahrwerk (15) mit einem Rad abgestützt ist, und mit einer Antriebseinheit zum Drehantrieb der Schnecke und des Rades, dadurch **gekennzeichnet,** daß sie mindestens einen zweiten Balken (20) von allgemein gleichartigem Aufbau wie der erste Balken (10) aufweist, der mit einem seiner Enden, als inneres Ende (20a) bezeichnet, schwenkbar um ein am äußeren Ende (10b) des ersten Balkens (10) angeordnetes Schwenklager (6) gelagert ist, während der zweite Balken (20) an seinem anderen Ende (20b), als äußeres Ende bezeichnet, auf dem Siloboden durch ein Fahrwerk (25) abgestützt ist, wobei am zweiten Balken eine zweite Schnecke drehbar gelagert ist, daß zwei Antriebseinheiten (M1, M'1; M2, M'2) den beiden Balken (10, 20) zugeordnet sind, wobei jede Antriebseinheit (15; 25) einen Motor (M1; M2), der die Schnecke (16; 26) antreibt, und einen Motor (M'1; M'2), der das Fahrwerk (15; 25) des zugehörigen Balkens (10, 20) steuert, aufweist, und daß Mittel (50) vorgesehen sind, die das Schwenken des zweiten Balkens (20) relativ zum ersten Balken (10) regeln und daß Mittel (55) vorgesehen sind, die das Schwenken des ersten Balkens (10) bezüglich des zweiten Balkens (20) regeln, wenn sich dieser nicht bewegt.

2. Vorrichtung nach Anspruch 1, dadurch **gekennzeichnet,** daß die beiden Antriebseinheiten (M1, M'1; M2, M'2) nahe den äußeren Enden (10b, 20b) der beiden Balken (10, 20) angeordnet sind.

3. Vorrichtung nach Anspruch 1 oder 2, dadurch **gekennzeichnet,** daß die beiden Balken (10, 20), wenn sie parallel zueinander sind, relativ zueinander versetzt sind, wobei der zweite Balken (20) bezüglich der Drehrichtung vor dem ersten Balken (10) liegt und das Ende der Schnecke (26) des zweiten Balkens (20) an dessen inneren Ende sich über das Ende der Schnecke (16) des ersten Balkens (10) an dessen äußeren Ende erstreckt, damit das durch die zweite Schnecke geförderte Gut durch die erste Schnecke übernommen wird.

4. Vorrichtung nach Anspruch 1, dadurch **gekennzeichnet,** daß die Mittel (50) durch eine elektrische Vorrichtung (51) gebildet werden, die in der Steuerschaltung des Antriebsmotors (M'2) des Fahrwerkes (25) des zweiten Balkens (20) angeordnet ist und durch einen radialen Finger (52) betätigt wird, der mit dem Gelenkzapfen (6) der beiden Balken (10, 20) drehfest verbunden ist.

5. Vorrichtung nach Anspruch 1, dadurch **gekennzeichnet,** daß die Mittel (55) durch eine elektrische Vorrichtung (56) gebildet werden, die in der Steuerschaltung des Antriebsmotors (M'1) des Fahrwerkes (15) des ersten Balkens (10) angeordnet ist und ebenfalls durch den radialen Finger (52) betätigt wird.

6. Vorrichtung nach einem der vorhergehenden Ansprüche, dadurch **gekennzeichnet,** daß die Motoren (M1; M2) der Schnecken (16; 26) nacheinander in Betrieb gesetzt werden.

7. Vorrichtung nach einem der vorhergehenden Ansprüche, dadurch **gekennzeichnet,** daß die von dem ersten Balken (20) getragene Schnecke (26) sich über dessen äußeres Ende (20b) erstreckt.

8. Vorrichtung nach einem der Ansprüche 1 bis 6, dadurch **gekennzeichnet,** daß sie mindestens einen dritten Balken (30) von allgemein gleichartigem Aufbau wie die beiden Balken (10, 20) aufweist, der mit einem seiner Enden, als inneres Ende (30a) bezeichnet, schwenkbar um ein am äußeren Ende (20b) des zweiten Balkens (20) angeordnetes Schwenklager (7) gelagert ist, während der dritte Balken (30) nahe seinem anderen Ende (30b), als äußeres Ende bezeichnet, auf dem Siloboden durch ein Fahrwerk (35) mit einer Rotationsachse parallel zum Balken abgestützt ist, und daß drei Antriebseinheiten (M1, M'1; M2, M'2; M3, M'3) den drei Balken (10, 20, 30) zugeordnet sind.

9. Vorrichtung nach Anspruch 8, dadurch **gekennzeichnet,** daß sie die oben genannten Mittel (50) aufweist, um das Schwenken des dritten Balkens (30) bezüglich des zweiten Balkens (20) zu regeln.

10. Vorrichtung nach Anspruch 8 oder 9, dadurch **gekennzeichnet,** daß sie die oben genannten Mittel (50) aufweist, um das Schwenken des zweiten Balkens (20) bezüglich des dritten Balkens (30) zu regeln.

11. Vorrichtung nach einem der Ansprüche 8 bis 10, dadurch **gekennzeichnet,** daß die vom dritten Balken (30) getragene Schnecke (36) sich über dessen äußeres Ende (30b) erstreckt.
